# EUROPEAN PATENT SPECIFICATION

(11) **EP 0 404 739 B1**
(45) Date of publication and mention of the grant of the patent: **08.12.1993**
(21) Application number: 90850173.7
(22) Date of filing: 10.05.1990
(51) Int. Cl.: F16C 33/10

(54) **Magnetic bearing bushing**
Magnetische Lagerbüchse
Coussinet magnétique

(30) Priority: 21.06.1989 SE 8902244
(43) Date of publication of application: 27.12.1990
(73) Proprietor: SKF Nova AB, S-415 50 Göteborg (SE)
(72) Inventor: Adolfsson, Rune, S-43252 Varberg (SE)

(56) References cited:
- FR-A- 2 511 110
- US-A- 3 107 955
- US-A- 3 746 407
- US-A- 4 254 961

## Description

### Technical field

The present invention refers to a bearing arrangement incorporating a sleeve of elastic material forming the sliding surface of the bearing, a shaft mounted in said sleeve, a lubricating oil between the sliding surfaces of the sleeve and the shaft, axial channels on the inner side of the sleeve and recesses on the outer side of the sleeve.

### Background of the invention

US-A-3 107 955 discloses a bearing arrangement of the type mentioned above intended particularly for high loads and intermittent or reversed motion between sleeve and shaft.

Magnetic bearings are used in many applications, e.g. at disk storages for computers, in domestic machines etcetera, wherein it is aimed at silent operation, extended operation life and high rotational accuracy under rather low loads. An important advantage at such bearings is that the lubricant, which contains particles of magnetised material, is retained in the bearing by the magnetic field geneterated by the magnetic bearing sleeve, whereby leakage of the lubricant is prevented.

In DE-A-3.304.623 is shown a magnetic bearing incorporating a magnetic bearing sleeve, which on its surface facing the shaft has grooves for causing a hydrodynamic pressure in the magnetic fluid. This device has a complex design and the shape of the grooves furthermore requires that the shaft is rotated in the same direction all the time.

### Purpose and most essential features of the invention

The purpose of the invention is to provide a bearing of the type initially mentioned, which provides a hydrodynamic lubrication and an efficient cooling and which is simple and inexpensive to manufacture. This has been achieved in that the sleeve consists of a magnetised material, that the lubricant is a magnetic oil, that the recesses (g) are for circulation of oils, and that the sleeve is provided with a number of radial holes through which the magnetic fluid can pass to the outer side of the sleeve.

### Description of the drawings

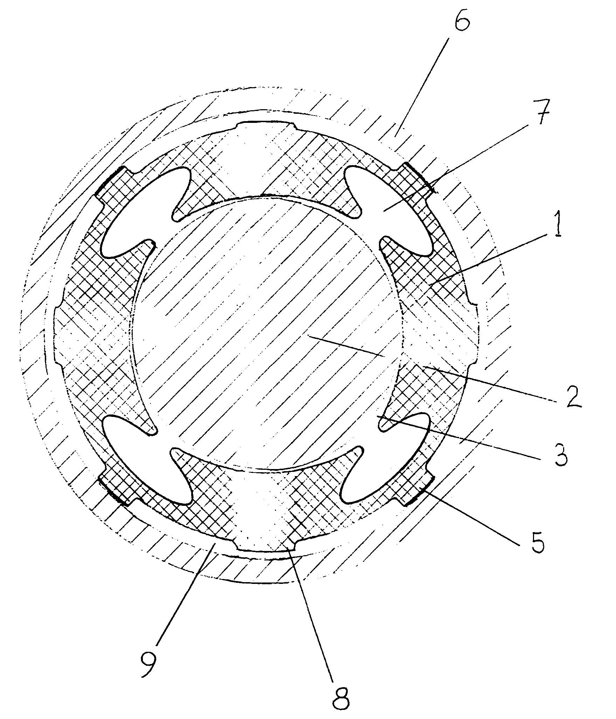

The invention hereinafter will be further described with reference to an embodiment shown in the accompanying drawing, which shows a section through the bearing bushing.

### Description of embodiments

The bearing bushing incorporates a sleeve 1 of magnetisable material, preferably a synthetic material, in which have been embedded magnetic particles, e.g. magnetite particles. The shaft 2 may be of a magnetic or non-magnetic material. Between the sleeve 1 and the shaft 2 is introduced a lubricant in form of a magnetic fluid 3, a so called "ferrofluid", i.e. a colloidal dispersion or suspension of small magnetic particles in a carrier fluid, e.g. oil. The magnetic particles are retained in stable colloidal suspension by means of a dispersant. Such magnetic fluids can be introduced and retained in spaces without a container by means of a magnetic field.

As can be seen from the figure, the sleeve 1 on its inner side has axial channels 7, which give a big fluid volume, and therefore a good cooling effect. They furthermore act as a reserve for the magnetic fluid, which gives the bearing a long service life. The channels 7 also act as receiver of dirt particles, especially if magnetic poles are provided in the channels.

The sleeve 1 may be magnetised in axial direction, which means that magnetic fluid 3 is gathered at the ends of the sleeve 1 thereby sealing off it. The sleeve 1 furthermore has a number of axial recesses 9. By means of the magnetic field present around the sleeve 1 in axial direction a certain circulation of the magnetic fluid will occur, which provides a cooling effect. The sleeve, particularly if it shall support low loads, is provided with holes made therein between the channels 7. This improves the circulation and the cooling effect. The sleeve 1 may also be magnetised in radial direction, especially around the radial holes.

The sleeve 1 as mentioned is manufactured from a synthetic material, e.g. plastics or rubber with embedded magnetite particles or alternatively with an embedded magnetisable steel spring. The advantages with a sleeve of magnetisable plastic material are obvious, it may be manufactured by injection moulding and it is possible to give it complex shapes. The sleeve may also be given desired elasticity by means of a proper material choice.

In order to give the bearing a desired rigidity for a clearance-free, stable supporting it may be pre-tensioned. During operation the bearing is however heated and the pretension is altered as both plastics and rubber have higher thermal expansion coefficients than steel, which is the common material for the shaft. In order to prevent that the pre-tension is altered too much the sliding bearing blocks 1 therefore have been given a suitable geometry, thus that they may flex when needed and it has furthermore been provided ribs or axial ridges 8 on the outer side of the sleeve, which delimit the expansion of the sleeve 1 and the altering of the pretension.

## Claims

1. A bearing arrangement incorporating a sleeve (1) of elastic material forming the sliding surface of the bearing, a shaft (2) mounted in said sleeve (1), a lubricating oil (3) between the sliding surfaces of the sleeve (1) and the shaft (2), axial channels (7) on the inner side of the sleeve (1) and recesses (9) on the outer side of the sleeve (1),
**characterized therein,**
that the sleeve (1) consists of a magnetised material, that the lubricant (3) is a magnetic oil, that the recesses (g) are for circulation of oil and that the sleeve (1) is provided with a number of radial holes through which the magnetic fluid (3) can pass to the outer side of the sleeve (1).

2. The bearing arrangement as claimed in claim 1,
**characterized therein,**
that the sleeve (1) is magnetised in axial direction.

3. The bearing arrangement as claimed in claim 1,
**characterized therein,**
that the sleeve (1) is magnetised in radial direction.

4. The bearing arrangement as claimed in anyone of claims 1-3,
**characterized therein**,
that the sleeve (1) on the outer side is provided with ribs or ridges (8) intended to limit the bearing clearance.

## Patentansprüche

1. Lageranordnung mit einer die Gleitflächen des Lagers bildenden Büchse (1) aus elastischem Material, einer in der Büchse (1) gelagerten Welle (2), einem Schmieröl (3) zwischen den Gleitflächen der Büchse (1) und der Welle (2), axialen Kanälen (7) auf der Innenseite der Büchse (1) und Aussparungen (9) auf der Außenseite der Büchse (1), **dadurch gekennzeichnet**, daß die Büchse (1) aus magnetisiertem Material besteht, das Schmiermittel (3) ein magnetisches Öl ist, die Aussparungen (9) der Ölzirkulation dienen und die Büchse (1) mit einer Anzahl radialer Löcher versehen ist, durch welche das magnetische Fluid (3) zur Außenseite der Büchse (1) hindurchtreten kann.

2. Lageranordnung nach Anspruch 1, **dadurch gekennzeichnet**, daß die Büchse (1) in axialer Richtung magnetisiert ist.

3. Lageranordnung nach Anspruch 1, **dadurch gekennzeichnet**, daß die Büchse (1) in radialer Richtung magnetisiert ist.

4. Lageranordnung nach einem der Ansprüche 1 bis 3, **dadurch gekennzeichnet**, daß die Büchse (1) auf der Außenseite mit Rippen oder Kanten (8) zur Begrenzung des Lagerspalts versehen ist.

## Revendications

1. Agencement de palier qui comprend un manchon (1) en matériau élastique formant la surface de glissement du palier, un arbre (2) monté dans ledit manchon (1) , une huile lubrifiante (3) entre les surfaces de glissement du manchon (1) et de l'arbre (2), des canaux axiaux (7) sur le côté intérieur du manchon (1) et des évidements (9) sur le côté extérieur du manchon (1),
caractérisé en ce que le manchon (1) est fait en matière aimantée, en ce que le lubrifiant (3) est une huile magnétique, en ce que les évidements (9) sont destinés à la circulation de l'huile et en ce que le manchon (1) est pourvu d'un certain nombre de trous radiaux par lesquels le fluide magnétique (3) peut passer pour aller vers le côté extérieur du manchon (1).

2. Agencement de palier selon la revendication 1, caractérisé en ce que le manchon (1) est aimanté dans la direction axiale.

3. Agencement de palier selon la revendication 1, caractérisé en ce que le manchon (1) est aimanté dans la direction radiale.

4. Agencement de palier selon l'une quelconque des revendications 1 à 3, caractérisé en ce que le manchon (1) est pourvu, sur son côté extérieur, de nervures ou arêtes (8) destinées à limiter le jeu du palier.
